# EUROPEAN PATENT SPECIFICATION

(11) **EP 3 904 925 B1**
(45) Date of publication and mention of the grant of the patent: **09.10.2024**
(21) Application number: 18900575.4
(22) Date of filing: 29.12.2018
(51) Int. Cl.: G02B 6/02, G02B 6/028, G02B 6/036

(54) **NOVEL OPTICAL FIBER**
NEUARTIGE OPTISCHE FASER
NOUVELLE FIBRE OPTIQUE

(43) Date of publication of application: 03.11.2021
(73) Proprietor: Zhongtian Technology Fiber Potics Co., Ltd, Economic Development Zone Nantong City Jiangsu 226000 (CN); Jiangsu Zhongtian Technology Co., Ltd., Nantong, Jiangsu 226463 (CN); Zhongtian Technology Advanced Materials Co., Ltd., Jiangsu 226010 (CN); Jiangdong Science and Technology Co., Ltd, Rudong County Economic Development Zone Nantong Jiangsu 226400 (CN)
(72) Inventor: CAO, Shanshan, Jiangsu 226000 (CN); JIANG, Xinli, Jiangsu 226000 (CN); LIU, Zhizhong, Jiangsu 226000 (CN); SHEN, Yichun, Jiangsu 226000 (CN); WANG, Zhen, Jiangsu 226000 (CN); SU, Haiyan, Jiangsu 226000 (CN); XU, Haitao, Jiangsu 226000 (CN)
(74) Representative: Zaboliene, Reda
(86) International application number: PCT/CN2018/125787
(87) International publication number: WO 2020/133478

(56) References cited:
- CN-A- 1 514 262
- CN-A- 103 149 630
- CN-A- 105 204 110
- CN-A- 105 511 015
- US-A- 5 913 005
- US-A1- 2013 230 290
- US-A1- 2015 063 754

## Description

### FIELD

The invention relates to the field of optical fiber technology, in particular to a novel optical fiber for a data center.

### BACKGROUND

This section is intended to provide a background or context for the embodiments of the invention set forth in the claims. The description herein is not admitted to be prior art through included in this section.

Single-mode optical fibers and multi-mode optical fibers are significant different in mode and number, and are two different kinds of optical fibers used in different applications. The multi-mode optical fibers and single-mode optical fibers are both used in data centers. Compared with the multi-mode optical fibers, the single-mode fiber is cheaper, but single-mode transceivers are more expensive than multi-mode transceivers. By comprehensive evaluation, when the transmission distance is less than 100-150 meters, multi-mode transmission is still the most cost effective option.

However, as the mass and scale of the data centers increase, the system bandwidth becomes higher and the reach distance becomes longer, the transmissions of longer distances in the data centers still rely on the single-mode optical fibers. Therefore, both the single-mode optical fibers and the multi-mode optical fibers exist in a data center, which requires special processing for couplings. An optical fiber that can achieve both single and multiple transmission modes would greatly simplify cable management and reduce upgrade costs of transceivers in future.
US2015/063754A1 discloses such an optical fiber that can achieve both single mode and multimode transmission.

### SUMMARY OF THE INVENTION

In view of the above, it is necessary to provide an improved novel optical fiber that combines both single-mode and multi-mode transmissions.

The technical solution provided by the present invention is a novel optical fiber according to claim 1. Further embodiments are described in the dependent claims. The novel optical fiber of the invention can achieve both single-mode transmission and multi-mode transmission, which greatly simplifies the management of the optical cables, reduces the future upgrade cost of transceivers. The optical fiber has a good low loss characteristics by including the transition layers. The optical fiber has a better resistance to bending by including a lower doped layer or a recessed layer.

### BRIEF DESCRIPTION OF THE DRAWINGS

The present invention will be further described in detail below in conjunction with the drawings and the specific embodiments.
FIG. 1 is a refractive index distribution diagram of a novel optical fiber in a first embodiment not being part of the claimed invention.
FIG. 2 is a refractive index distribution diagram of a novel optical fiber in a second embodiment not being part of the claimed invention.
FIG. 3 is a refractive index distribution diagram of a novel optical fiber in a third embodiment of the present invention.
FIG. 4 is a refractive index distribution diagram of a novel optical fiber in a fourth embodiment of the present invention.
FIG. 5 is a refractive index distribution diagram of a novel optical fiber in a fifth embodiment not being part of the claimed invention.
FIG. 6 is a refractive index distribution diagram of a novel optical fiber in a sixth embodiment not being part of the claimed invention.
FIG. 7 is a refractive index distribution diagram of a novel optical fiber in a seventh embodiment of the present invention.
FIG. 8 is a refractive index distribution diagram of a novel optical fiber in an eighth embodiment of the present invention.

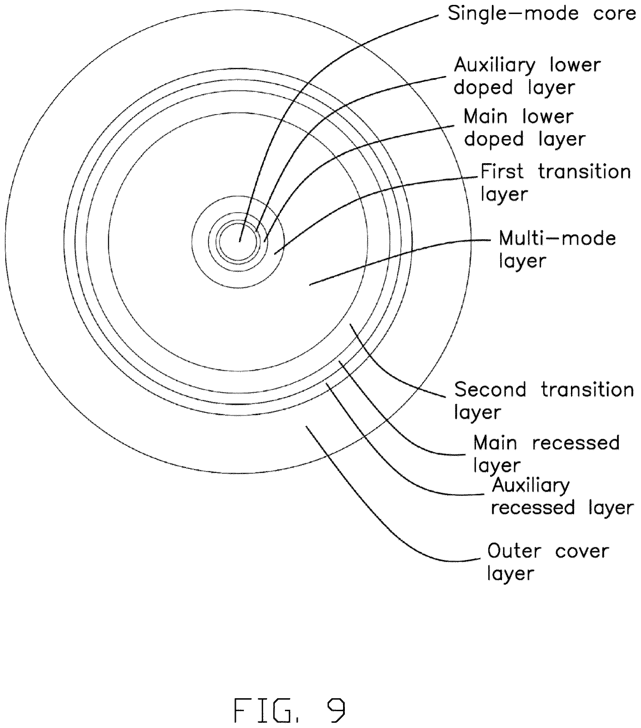

FIG. 9 is a schematic cross-sectional view of the novel optical fiber of FIG. 8.

### Description of the reference signs: no.

The embodiments of the present invention will be further described in conjunction with the accompanying drawings.

### DETAILED DESCRIPTION

The above described objects, features and advantages of the embodiments of the present invention will be described in detail in conjunction with the accompanying drawings. It should be noted that the features in the embodiments of the present application may be combined with each other without conflict.

In the following description, numerous specific details are set forth in the description of the embodiments of the invention. The described embodiments do not represent the complete invention but only part of the invention. All other embodiments obtained by those skilled in the art based on the embodiments of the present invention, without creative efforts, fall within the scope of the present invention.

Without specific definition, all technical and scientific terms used herein have the same meaning as commonly understood by one of ordinary skill in the art of the invention. The terms used in the description of the present invention are for the purpose of describing the particular embodiments, and are not intended to limit the embodiments of the invention.

The invention provides a novel optical fiber including both a single-mode fiber and a multi-mode fiber, and capable of achieving both single-mode transmission and multi-mode transmission, which greatly simplifies cable management and reduces future upgrade costs of transceivers. The novel optical fiber includes, from the inside to the outside, a single-mode core, a multi-mode layer, and an outer cover layer all coaxially disposed. The single-mode core is located at a center of the optical fiber and has an upper step index. The multi-mode layer surrounds the single-mode core, and has a refractive index of α-profile distribution. A plurality of transition layers is disposed on an inner side and optionally an outer side of the multi-mode layer. The transition layers are coaxial with the single-mode core and the outer cover layer, and the transition layers cling to the multi-mode layer. A refractive index of the transition layers disposed on the inner side of the multi-mode layer is equal to a refractive index of a contact portion of the multi-mode layer which is in contact with the transition layers disposed on the inner side of the multi-mode layer. A refractive index of an optional transition layer disposed on the outer side of the multi-mode layer is equal to a refractive index of an outer contact portion of the multi-mode layer which is in contact with the transition layer disposed on the outer side of the multi-mode layer.

Among the transition layers, a transition layer is disposed between the single-mode core and the multi-mode layer, which is also referred to as a first transition layer. As compared to pure silica, the first transition layer has a relative refractive index δ₀ of 0.5% to 2.0%. The first transition layer has a one-side width W₀ between 1µm and 4µm. The relative refractive index δ₀ of the first transition layer is lower than a relative refractive index δ₁ of the single-mode core, and equal to a refractive index of a contact portion of the multi-mode layer (i.e., the inner side of the multi-mode layer) which is in contact with the first transition layer. The difference is reduced, and meanwhile the viscosity of the precursor of the transition layer is between the viscosities of the single-mode core and of the multi-mode layer during pre-fabrication. Uniform drawing of a multilayer sandwich structure can thus be realized, which relieves the stress risers and large attenuation caused by a viscosity mismatch during the drawing process, and makes the new fiber have a lower loss characteristics.

Among the transition layers, a transition layer is disposed between the multi-mode layer and the outer cover layer, which is also referred to as a second transition layer. As compared to pure silica, the second transition layer has a relative refractive index δ₅ of -0.4% to 0.15 %. A one-side width W₅ of the second transition layer is between 1µm and 7µm. The relative refractive index δ₅ is equal to a refractive index of a contact portion of the multi-mode layer (i.e., the outer side of the multi-mode layer), ensuring that the multi-mode layer has a lower loss characteristics and reduced difficulties in molding.

The single-mode core is germanium-doped silica glass having a radius r₁ between 3µm and 5µm, and a relative refractive index δ₁ which is higher than the relative refractive index δ₀ of the first transition layer, δ₁-δ₀= 0.25%~0.4%.

The multi-mode layer has a relative refractive index δ₂ which is between the relative refractive index δ₀ of the first transition layer and the relative refractive index δ₅ of the second transition layer, and is α-profile distributed. A radius r₂ of the multi-mode layer is between 15µm and 35µm. The α is between 1.8 and 2.5.

The novel fiber has a radius r₃ of between 62µm and 63µm.

The outer cover layer is of pure silica glass.

According to the claimed invention, a lower doped layer of lower step index is disposed between the single-mode core and the multi-mode layer. A relative refractive index δ₄ of the lower doped layer is lower than the relative refractive index δ₀ of the first transition layer, and a one-side width W₄ of the lower doped layer is between 0.5µm and 5µm. δ₄-δ₀=-0.05% ~ -0.35%. In a specific embodiment, the lower doped layer includes a multi-layer structure disposed coaxially, among which a main lower doped layer has a lower step index, and the other layers are auxiliary lower doped layers. For example, the lower doped layer includes the main lower doped layer and an auxiliary lower doped layer. A width W₀₄ of a single layer of the main lower doped layer is between 1µm and 4µm, and δ₀₄-δ₀=-0.1%~-0.35%. A width W₁₄ of a single layer of the auxiliary lower doped layer is between 0.5µm and 4µm, and δ₁₄-δ₀=-0.05%~-0.2%.

In a specific embodiment, a recessed layer having a lower step index is included between the multi-mode layer and the outer cover. A relative refractive index δ₆ of the recessed layer is lower than the relative refractive index δ₅ of the second transition layer. The recessed layer has a one-sided width W₆ between 2µm and 45µm. The relative refractive index δ₆ is between -0.05% and -0.4%. The outer cover layer is of pure silica glass. In a specific embodiment, the recessed layer comprises a multi-layer structure disposed coaxially, among which a main recessed layer has a lower step index, and the other layers are auxiliary recessed layers. For example, the recessed layer includes the main recessed layer and an auxiliary recessed layer. A width W₀₆ of a single layer of the main recessed layer is between 2µm and 6µm, and a relative refractive index δ₀₆ of the main recessed layer is between -0.2% and -0.4%. A width W₁₆ of a single layer of the auxiliary recessed layer is between 2µm and 45µm, and a relative refractive index δ₁₆ of the auxiliary recessed layer is between -0.05% and -0.2%.

Example 1 not being covered by the claimed invention

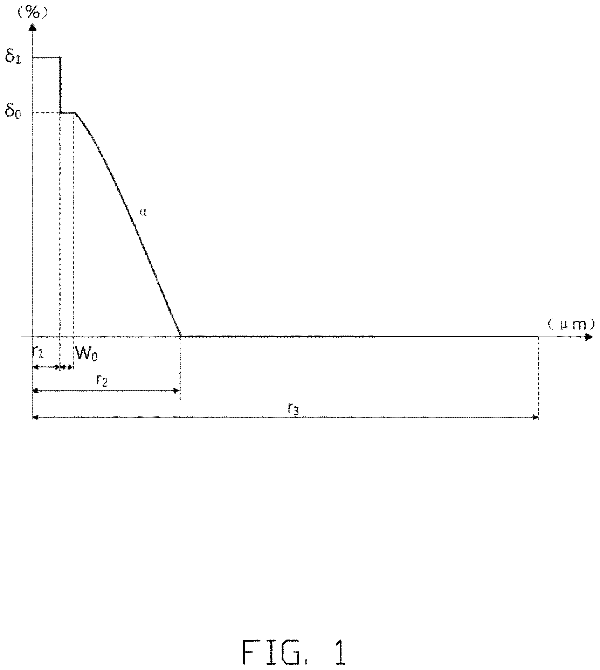

As shown in FIG. 1, the novel optical fiber includes a single-mode core, a first transition layer, a multi-mode layer and an outer cover layer disposed coaxially from the inside to the outside. The single-mode core is located at a center of the optical fiber and has an upper step index. The multimode layer surrounds the first transition layer and has a refractive index of α-profile distribution. The single mode core has a radius r₁ of 4µm and a relative refractive index δ₁ of 1.25%. The first transition layer has a step index, and a one-side width W₀ of 2µm. A relative refractive index δ₀ of the first transition layer is 1.0%. The multi-mode layer has a radius r₂ of 18µm. The α is 1.8. The outer cover layer is of pure silica glass. A radius r₃ of the novel optical fiber is 62µm. Main characteristics of the novel optical fiber are as follows: the mode field (@ 1300nm) diameter of the single-mode core is 9.8µm, the cut-off wavelength of the optical fiber is 1210nm, and the over filled launch bandwidth of the multi-mode layer is 500MHz.km at a waveform of 850nm and is 2500MHz.km at a waveform of 1310nm.

Example 2 not being covered by the claimed invention

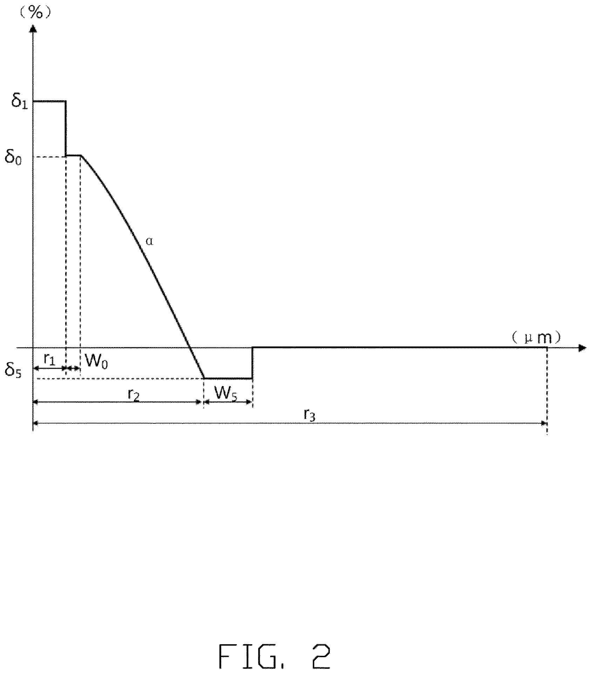

As shown in FIG. 2, the novel optical fiber includes a single-mode core, a first transition layer, a multi-mode layer, a second transition layer, and an outer cover layer coaxially disposed from the inside to the outside. The single-mode core is located at a center of the optical fiber and has an upper step index. The multi-mode layer is disposed between the first transition layer and the second transition layer, and has a refractive index of α-profile distribution. The single mode core has a radius r₁ of 3.8µm and a relative refractive index δ₁ of 1.65%. The first transition layer has a step index, and a one-side width W₀ of 2µm. A relative refractive index δ₀ of the first transition layer is 1.3%. The multi-mode layer has a radius r₂ of 20.5µm. The α is 1.97. The second transition layer has a step index, and a one-side width W₅ of 6µm. A relative refractive index δ₅ of the second transition layer is -0.2%. The outer cover layer is of pure silica glass. A radius r₃ of the novel optical fiber is 62.5µm. Main characteristics of the novel optical fiber are as follows: the mode field diameter of the single mode core is 9.1µm, the cut-off wavelength of the novel optical fiber is 1300 nm, and the over filled launch bandwidth of the multi-mode layer is 1300 MHz-km at a wavelength of 850 nm and is 1300MHz-km at a wavelength of 1310 nm.

### Example 3

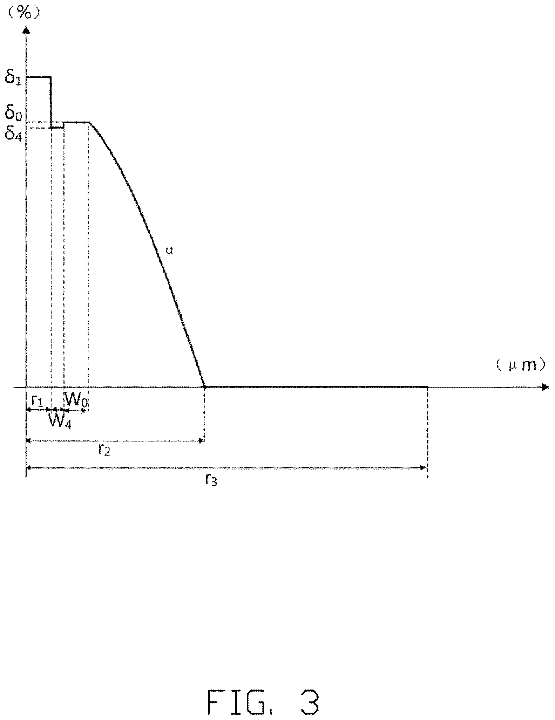

As shown in FIG. 3, the novel optical fiber includes a single-mode core, a lower doped layer, a first transition layer, a multi-mode layer and an outer layer coaxially disposed from the inside to the outside. The single-mode core is located at a center of the optical fiber and has an upper step index. The multi-mode layer surrounds the transition layer and has a refractive index of α-profile distribution. The single mode core has a radius r₁ of 4µm and a relative refractive index δ₁ of 2.1%. The lower doped layer has a one-side width W₄ of 2µm and a relative refractive index δ₄ of 1.78%. The first transition layer has a step index, and a one-side width W₀ of 4µm. A relative refractive index δ₀ of the first transition layer is 1.8%. The multi-mode layer has a radius r₂ of 30µm. The α is 2.05. The outer cover layer is of pure silica glass. A radius r₃ of the novel optical fiber is 63µm. Main characteristics of the novel optical fiber are as follows: the mode field diameter of the single-mode core is 8.9µm at a wavelength of 1310 nm, and the cut-off wavelength of the optical fiber is 1250 nm, and the over filled launch bandwidth of the multi-mode layer is 4500 MHz·km at a wavelength of 850 nm, and is 600 MHz-km at a wavelength of 1310 nm. The macrobend loss of the novel optical fiber when wound for 10 turns around a bend radius of 15 mm is 0.067 dB at a wavelength of 850 nm and is 0.002 dB at a wavelength of 1310 nm.

### Example 4

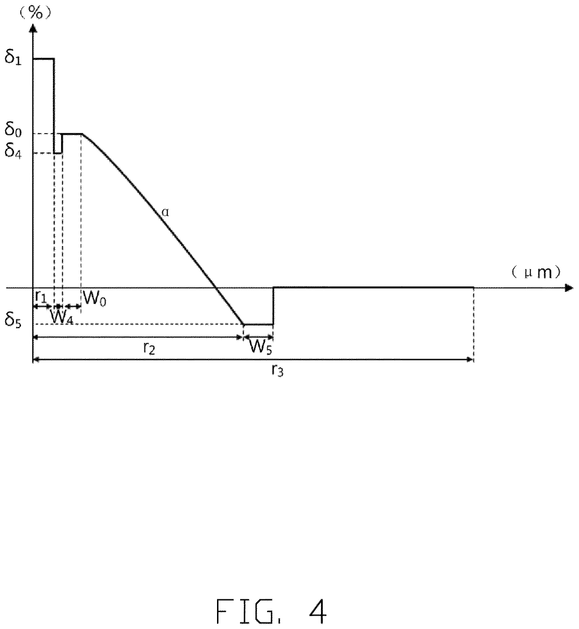

As shown in FIG. 4, the novel optical fiber includes a single-mode core, a lower doped layer, a first transition layer, a multi-mode layer, a second transition layer, and an outer cover layer coaxially disposed from the inside to the outside. The single-mode core is located at a center of the optical fiber and has an upper step index. The multi-mode layer is disposed between the first transition layer and the second transition layer, and has a refractive index of α-profile distribution. The single mode core has a radius r₁ of 3.4µm, and a relative refractive index δ₁ of 1.2%. A one-side width W₄ of the lower doped layer is 1µm and a relative refractive index δ₄ of the lower doped layer is 0.7%. The first transition layer has a step index, and a one-side width W₀ of 3µm. A relative refractive index δ₀ of the first transition layer is 0.8%. The multi-mode layer has a radius r₂ of 30µm. The α is 2.1. The second transition layer has a step index, and a one-side width W₅ of 4µm. A relative refractive index δ₅ of the second transition layer is -0.2%. The cover layer is of pure silica glass. A radius r₃ of the novel optical fiber is 62.3µm. Main characteristics of the novel optical fiber are as follows: the mode field diameter of the single mode core is 8.8µm at a wavelength of 1310 nm, the cut-off wavelength is 1290 nm, and the over filled launch bandwidth of the multi-mode layer is 2500 MHz-km at a wavelength of 850 nm and is 500 MHz-km at a wavelength of 1310 nm. The macrobend loss of the novel optical fiber when wound for 10 turns around a bend radius of 15mm is 0.067dB at 850nm, and the fiber attenuation at 1310nm is about 0.002dB/km.

Example 5 not being covered by the claimed invention

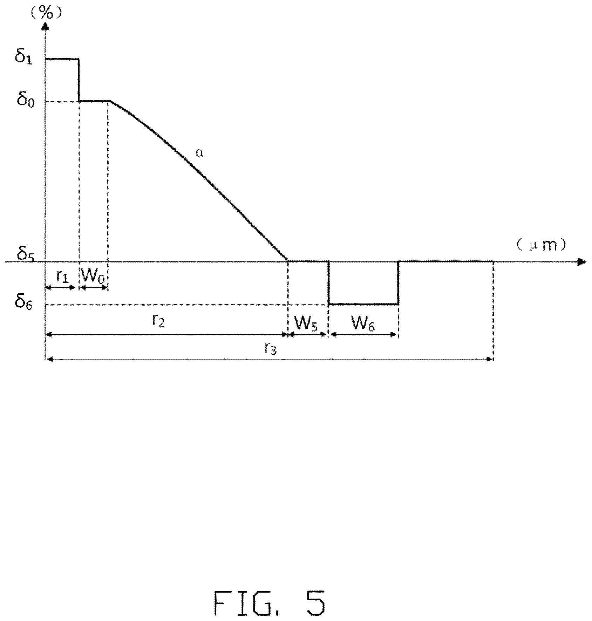

As shown in FIG. 5, the novel optical fiber includes a single-mode core, a first transition layer, a multi-mode layer, a second transition layer, a recessed layer, and an outer cover layer coaxially disposed from the inside to the outside. The single-mode core is located at a center of the optical fiber and has an upper step index. The multi-mode layer is disposed between the first transition layer and the second transition layer, and has a refractive index of α-profile distribution. The single mode core has a radius r₁ of 5µm, and a relative refractive index δ₁ of 1.9%. The first transition layer has a step index, and a one-side width W₀ of 4.5µm. The relative refractive index δ₀ of the first transition layer is 1.5%. A radius r₂ of the multi-mode layer is 34.5µm. The α is 2.2. The second transition layer has a step index, and a one-side width W₅ of 6µm.A relative refractive index δ₅ of the second transition layer is 0. A one-side width W₆ of the recessed layer is 10µm, and a relative refractive index δ₆ of the recessed layer is -0.4%. The outer cover layer is of pure silica glass. A radius r₃ of the novel optical fiber is 63µm. Main characteristics of the novel optical fiber are as follows: the over filled launch bandwidth of the multi-mode layer is 600 MHz·km at a wavelength of 850 nm and is 350 MHz-km at a wavelength of 1310 nm.

Example 6 not being covered by the claimed invention

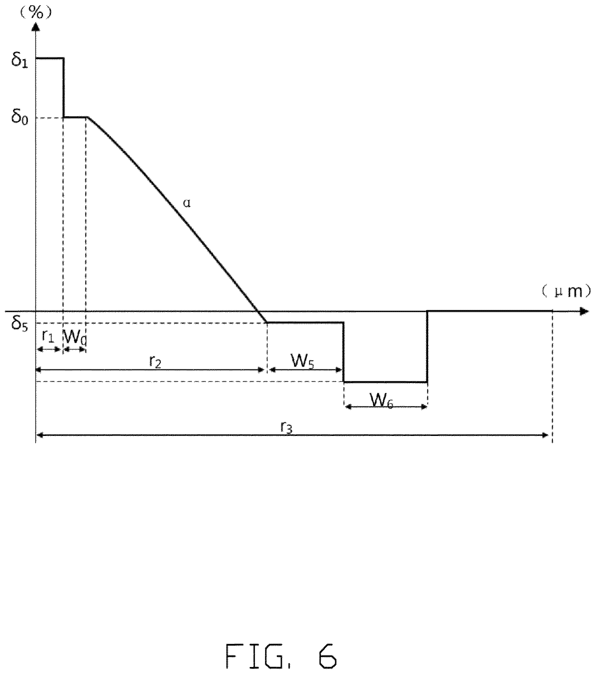

As shown in FIG. 6, the novel optical fiber includes a single-mode core, a first transition layer, a multi-mode layer, a second transition layer, a recessed layer, and an outer cover layer coaxially disposed from the inside to the outside. The single-mode core is located at a center of the optical fiber and has an upper step index. The multi-mode layer is disposed between the first transition layer and the second transition layer, and has a refractive index of α-profile distribution. The single mode core has a radius r₁ of 3µm, and a relative refractive index δ₁ of 1.3%. The first transition layer has a step index, and a one-side width W₀ is 1.5µm. A relative refractive index δ₀ of the first transition layer is 1%. The multi-mode layer has a radius r₂ of 28µm, . The α is 2.15. The second transition layer has a step index, and a one-side width W₅ of 5.5µm. A relative refractive index δ₅ of the second transition layer is -0.05%. The recessed layer has a one-side width W₆ of 10µm, and a relative refractive index δ₆ of - 0.35%. The outer cover layer is of pure silica glass. A radius r₃ of the novel optical fiber is 62.5µm.

### Example 7

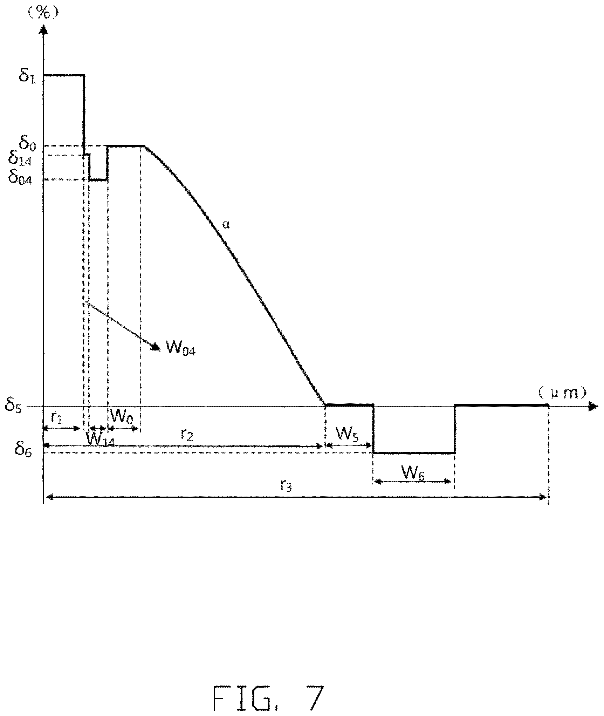

As shown in FIG. 7, the novel optical fiber includes a single-mode core, an auxiliary lower doped layer, a main lower doped layer, a first transition layer, a multi-mode layer, a second transition layer, a recessed layer and an outer cover layer coaxially disposed from the inside to the outside. The single-mode core is located at a center of the optical fiber and has an upper step index and a refraction index of α-profile distribution. The single mode core has a radius r₁ of 5µm and a relative refractive index δ₁ of 1.9%. A width W₁₄ of a single layer of the auxiliary lower doped layer is 1µm, and a relative refractive index δ₁₄ is 1.45%. A width W₀₄ of a single layer of the main lower doped layer is 2µm, and the relative refractive index δ₀₄ of the main lower doped layer is 1.3%. The first transition layer has a step index, and a one-side width W₀ of 4.5µm. A relative refractive index δ₀ of the first transition layer is 1.5%. The multi-mode layer has a radius r₂ of 35µm. The α is 2.2. The second transition layer has a step index, and a one-side width W₅ of 6µm.A relative refractive index δ₅ of the second transition layer is 0. A one-side width W₆ of the recessed layer is 10µm, and the relative refractive index δ₆ of the recessed layer is -0.3%. The outer cover layer is of pure silica glass. A radius r₃ of the novel optical fiber is 62.8µm. Main characteristics of the novel optical fiber are as follows: the macrobend loss when wound for 10 turns around a bend radius of 15mm is 0.054 dB at a wavelength of 850 nm and is 0.001 dB at a wavelength of 1310 nm.

### Example 8

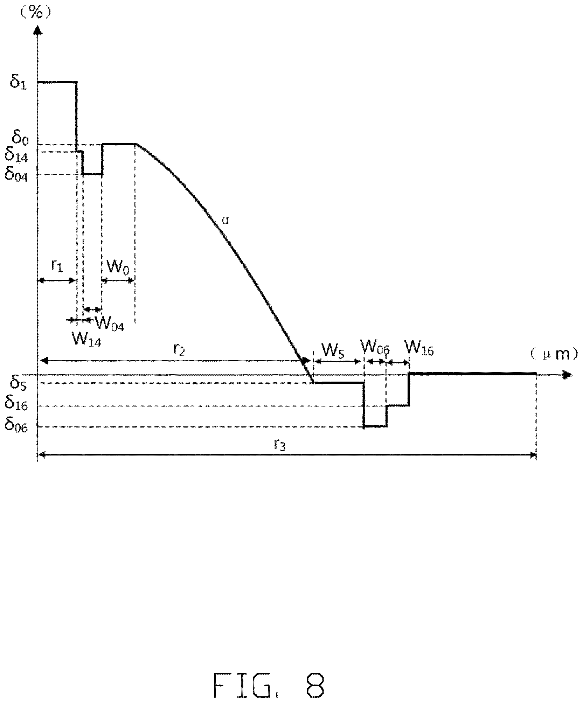

As shown in FIG. 8, the novel optical fiber includes a single-mode core, a first transition layer, a multi-mode layer, a second transition layer, a main recessed layer, an auxiliary recessed layer, and an outer cover layer disposed coaxially from the inside to the outside. The single-mode core is located at a center of the optical fiber and has an upper step index and a refractive index of α-profile distribution. The single-mode core has a radius r₁ of 5µm and a relative refractive index δ₁ of 1.9%. The first transition layer has a step index, and a one-side width W₀ of 4.5µm. A relative refractive index δ₀ of the first transition layer is 1.5%. A radius r₂ of the multi-mode layer is 35µm. The α is 2.2. The second transition layer has a step index, and a one-side width W₅ of 6µm. A relative refractive index δ₅ of the second transition layer is -0.05%. A width W₀₆ of a single layer of the main recessed layer is 3µm, and a relative refractive index δ₀₆ is of the main recessed layer -0.35%. A width W₁₆ of a single layer of the auxiliary recessed layer is 3µm, and a relative refractive index δ₁₆ of the auxiliary recessed layer is -0.2%. The outer cover layer is of pure silica glass. A radius r₃ of the novel optical fiber is 62.8µm. Main characteristics of the novel optical fiber are as follows: the macrobend loss when wound for 10 turns around a bend radius of 15mm is 0.048 dB at 850 nm and is 0.001 dB at 1310 nm.

The above embodiment shows that the single-mode core of the novel optical fiber of the present invention has a mode field diameter of 8.9 to 9.2µm, and a cut-off wavelength of 1250-1300nm. The over filled launch bandwidth of the multi-mode layer is 500~4500MHz·km at a wavelength of 850nm and is 400~2500 MHz-km at a wavelength of 1310nm. The macrobend loss of the optical fiber when wound for 10 turns around a bend radius of 15mm is 0.048 to 0.67 dB at a wavelength of 850 nm and is 0.001 to 0.02 dB at a wavelength of 1310 nm.

The above embodiments are only used to illustrate the technical solutions of the embodiments of the present invention, and the embodiments of the present invention are described in detail with reference to the preferred embodiments. Modifications and equivalents of the embodiments are not to be construed as a departure from the claims.

## Claims

1. A novel optical fiber comprising:
a single-mode core, a multi-mode layer and an outer cover layer coaxially disposed from the inside to the outside,
wherein:
the single-mode core is located at a center of the novel optical fiber and has a step index,
the multi-mode layer surrounds the single-mode core and has a refractive index of α-profile distribution,
a plurality of transition layers is disposed on an inner side and optionally an outer side of the multi-mode layer,
the transition layers are coaxial with the single-mode core and the outer cover layer,
the transition layers cling to the multi-mode layer,
a refractive index of a transition layer disposed on the inner side of the multi-mode layer is equal to a refractive index of an inner contact portion of the multi-mode layer which is in contact with the transition layer disposed on the inner side of the multi-mode layer,
a refractive index of an optional transition layer disposed on the outer side of the multi-mode layer is equal to a refractive index of an outer contact portion of the multi-mode layer which is in contact with the transition layer disposed on the outer side of the multi-mode layer;
a transition layer is disposed between the single-mode core and the multi-mode layer as a first transition layer, and as compared with pure silica, a relative refractive index δ₀ of the first transition layer is between 0.5% and 2.0%, and a one-side width W₀ of the first transition layer is between 1µm and 4µm;
when a transition layer is disposed between the multi-mode layer and the outer cover layer as a second transition layer, as compared to pure silica, a relative refractive index δ₅ of the second transition layer is between -0.4% and 0.15%, and a one-side width W₅ of the second transition layer is between 1µm and 7µm;
the single-mode core is germanium-doped silica glass, has a radius r₁ of between 3µm and
5µm, and a relative refractive index δ₁ which is higher than the relative refractive index δ₀ of the first transition layer, and δ₁-δ₀= 0.25%~0.4%; and
the novel optical fiber further comprises a lower doped layer having a lower step index disposed between the single-mode core and the multi-mode layer, wherein a relative refractive index δ₄ of the lower doped layer is lower than the relative refractive index δ₀ of the first transition layer, a one-side width W₄ of the lower doped layer is between 0.5µm and 5µm, and δ₄-δ₀=-0.05% - -0.35%.

2. The novel optical fiber according to claim 1, wherein a relative refractive index δ₂ of the multi-mode layer is between the relative refractive index δ₀ of the first transition layer and the relative refractive index δ₅ of the second transition layer, and is α-profile distributed, the multi-mode layer has a radius r₂ of between 15µm and 35µm, and the α is between 1.8 and 2.5.

3. The novel optical fiber according to claim 1, wherein the novel optical fiber has a radius r₃ of between 62µm and 63µm.

4. The novel optical fiber according to claim 1, wherein the lower doped layer comprises a multi-layer structure coaxially disposed, among which a main lower doped layer has a lower step index, and the other layers are auxiliary lower doped layers.

5. The novel optical fiber according to claim 1, wherein the lower doped layer comprises a main lower doped layer and an auxiliary lower doped layer, wherein:
a width W₀₄ of a single layer of the main lower doped layer is between 1µm and 4µm, and δ₀₄-δ₀=-0.1%~-0.35%;
a width W₁₄ of a single layer of the auxiliary lower doped layer is between 0.5µm and 4µm, and δ₁₄-δ₀=-0.05%~-0.2%.

6. The novel optical fiber according to any one of claims 2 to 3, further comprising a recessed layer having a lower step index disposed between the multi-mode layer and the outer cover layer, wherein a relative refractive index δ₆ of the recessed layer is lower than the relative refractive index δ₅ of the second transition layer, a one-sided width W₆ of the recessed layer is between 2µm and 45µm, and a relative refractive index δ₆ of the recessed layer is between -0.05% and -0.4%, the outer cover layer is of pure silica glass.

7. The novel optical fiber according to claim 6, wherein the recessed layer comprises a multi-layer structure disposed coaxially, among which a main recessed layer has a lower step index, and the other layers are auxiliary recessed layers.

8. The novel optical fiber according to claim 6, wherein the recessed layer includes a main recessed layer and an auxiliary recessed layer, wherein:
a width W₀₆ of a single layer of the main recessed layer is between 2µm and 6µm, and a relative refractive index δ₀₆ of the main recessed layer is between -0.2% and -0.4%;
a width W₁₆ of a single layer of the auxiliary recessed layer is between 2µm and 45µm, and a relative refractive index δ₁₆ of the auxiliary recessed layer is between -0.05% and -0.2%.

## Patentansprüche

1. Eine neue optische Faser, bestehend aus:
einem Singlemode-Kern, einer Multimode-Schicht und einer äußeren Deckschicht, die koaxial von innen nach außen angeordnet sind,
wobei:
der Singlemode-Kern befindet sich in der Mitte der neuen Glasfaser und hat einen Stufenindex. Die Multimode-Schicht umgibt den Singlemode-Kern und hat einen Brechungsindex mit einer α-Profilverteilung,
eine Vielzahl von Übergangsschichten ist auf einer Innenseite und optional einer Außenseite der Multimode-Schicht angeordnet,
die Übergangsschichten sind koaxial zum Singlemode-Kern und der äußeren Deckschicht,
die Übergangsschichten haften an der Multimode-Schicht,
ein Brechungsindex einer auf der Innenseite der Multimode-Schicht angeordneten Übergangsschicht ist
gleich einem Brechungsindex eines inneren Kontaktabschnitts der Multimode-Schicht, der mit der auf der Innenseite der Multimode-Schicht angeordneten Übergangsschicht in Kontakt steht,
ein Brechungsindex einer optionalen Übergangsschicht, die auf der Außenseite der Multimode-Schicht angeordnet ist, ist gleich einem Brechungsindex eines äußeren Kontaktabschnitts der Multimode-Schicht, der mit der auf der Außenseite der Multimode-Schicht angeordneten Übergangsschicht in Kontakt steht;
eine Übergangsschicht ist zwischen dem Einmodenkern und der Mehrmodenschicht als erste Übergangsschicht angeordnet, und verglichen mit reinem Siliciumdioxid beträgt ein relativer Brechungsindex δ₀ der ersten Übergangsschicht zwischen 0,5 % und 2,0 %, und eine einseitige Breite W0 der ersten Übergangsschicht beträgt zwischen 1 µm und 4 µm;
wenn eine Übergangsschicht zwischen der Mehrmodenschicht und der äußeren Deckschicht als zweite Übergangsschicht angeordnet ist, beträgt verglichen mit reinem Siliciumdioxid ein relativer Brechungsindex δ₅ der zweiten Übergangsschicht zwischen -0,4 % und 0,15 %, und eine einseitige Breite W₅ der zweiten Übergangsschicht beträgt zwischen 1 µm und 7 µm;
der Einmodenkern ist mit Germanium dotiertes Quarzglas,
hat einen Radius r₁ zwischen 3 µm und 5 µm und einen relativen Brechungsindex δ₁, der höher ist als der relative Brechungsindex δ₀ der ersten Übergangsschicht, und δ₁- δ₀ = 0,25 % ~ 0,4 %; und die neue optische Faser umfasst ferner eine niedriger dotierte Schicht mit einem niedrigeren Stufenindex, die zwischen dem Einmodenkern und der Mehrmodenschicht angeordnet ist, wobei ein relativer Brechungsindex δ₄ der niedriger dotierten Schicht niedriger ist als der relative Brechungsindex δ₀ der ersten Übergangsschicht, eine einseitige Breite W₄ der niedriger dotierten Schicht zwischen 0,5 µm und 5 µm beträgt und δ₄- δ₀ = -0,05 % ~ -0,35 %.

2. Die neue optische Faser nach Anspruch 1, wobei ein relativer Brechungsindex δ₂ der Multimodeschicht zwischen dem relativen Brechungsindex δ₀ der ersten Übergangsschicht und dem relativen Brechungsindex δ₅ der zweiten Übergangsschicht liegt und α-profilverteilt ist, die Multimodeschicht einen Radius r₂ zwischen 15 µm und 35 µm aufweist und der α zwischen 1,8 und 2,5 liegt.

3. Die neuartige optische Faser nach Anspruch 1, wobei die neuartige optische Faser einen Radius r₃ zwischen 62 µm und 63 µm aufweist.

4. Die neuartige optische Faser nach Anspruch 1, wobei die untere dotierte Schicht eine koaxial angeordnete Mehrschichtstruktur umfasst, von der eine untere dotierte Hauptschicht einen niedrigeren Stufenindex aufweist und die anderen Schichten untere dotierte Hilfsschichten sind.

5. Die neue optische Faser nach Anspruch 1, wobei die untere dotierte Schicht eine untere Hauptdotierungsschicht und eine untere Hilfsdotierungsschicht umfasst, wobei:
eine Breite W₀₄ einer einzelnen Schicht der unteren Hauptdotierungsschicht liegt zwischen 1 µm und 4 µm und δ₀₄-δ₀ = -0,1 % ~ -0,35 %;
eine Breite W₁₄ einer einzelnen Schicht der unteren Hilfsdotierungsschicht liegt zwischen 0,5 µm und 4 µm und δ₁₄-δ₀ = -0,05 % ~ -0,2 %.

6. Die neuartige optische Faser nach einem der Ansprüche 2 bis 3, die außerdem eine vertiefte Schicht mit einem niedrigeren Stufenindex umfasst, die zwischen der Multimode-Schicht und der äußeren Deckschicht angeordnet ist, wobei ein relativer Brechungsindex δ6 der vertieften Schicht niedriger ist als der relative Brechungsindex δ₅ der zweiten Übergangsschicht, eine einseitige Breite W₆ der vertieften Schicht zwischen 2 µm und 45 µm beträgt und ein relativer Brechungsindex δ₆ der vertieften Schicht zwischen -0,05 % und -0,4 % beträgt, wobei die äußere Deckschicht aus reinem Quarzglas besteht.

7. Die neuartige optische Faser nach Anspruch 6, wobei die vertiefte Schicht eine koaxial angeordnete Mehrschichtstruktur umfasst, von der eine Hauptvertiefungsschicht einen niedrigeren Stufenindex aufweist und die anderen Schichten Hilfsvertiefungsschichten sind.

8. Die neuartige optische Faser nach Anspruch 6, wobei die vertiefte Schicht eine Haupt-vertiefte Schicht und eine Hilfs-vertiefte Schicht umfasst, wobei:
eine Breite W₀₆ einer einzelnen Schicht der Hauptvertiefungsschicht liegt zwischen 2 µm und 6 µm, und ein relativer Brechungsindex δ06 der Hauptvertiefungsschicht liegt zwischen - 0,2 % und -0,4 %;
eine Breite W₁₆ einer einzelnen Schicht der vertieften Hilfsschicht liegt zwischen 2 µm und 45 µm, und ein relativer Brechungsindex δ₁₆ der vertieften Hilfsschicht liegt zwischen -0,05 % und 10 -0,2 %.

## Revendications

1. Une nouvelle fibre optique comprenant :
un coeur monomode, une couche multimode et une couche de revêtement externe disposés coaxialement de l'intérieur vers l'extérieur,
Où :
le coeur monomode est situé au centre de la nouvelle fibre optique et a un indice d'étape, la couche multimode entoure le coeur monomode et a un indice de réfraction de distribution α-profil,
une pluralité de couches de transition est disposée sur une face interne et éventuellement sur une face externe de la couche multimode,
les couches de transition sont coaxiales avec le coeur monomode et la couche de couverture extérieure,
les couches de transition s'accrochent à la couche multimode,
un indice de réfraction d'une couche de transition disposée sur la face interne de la couche multimode est égal à l'indice de réfraction d'une partie de contact interne de la couche multimode qui est en contact avec la couche de transition disposée sur la face interne de la couche multimode,
l'indice de réfraction d'une couche de transition optionnelle disposée sur la face externe de la couche multimode est égal à l'indice de réfraction d'une partie de contact externe de la couche multimode qui est en contact avec la couche de transition disposée sur la face externe de la couche multimode ;
une couche de transition est disposée entre le coeur monomode et la couche multimode en tant que première couche de transition, et par rapport à la silice pure, un indice de réfraction relatif δ₀ de la première couche de transition est compris entre 0,5 % et 2,0 %, et une largeur unilatérale W₀ de la première couche de transition est comprise entre 1 µm et 4 µm ;
lorsqu'une couche de transition est disposée entre la couche multimode et la couche de couverture externe en tant que seconde couche de transition, par rapport à la silice pure, un indice de réfraction relatif δ₅ de la seconde couche de transition est compris entre -0,4 % et 0,15 %, et une largeur unilatérale W₅ de la seconde couche de transition est comprise entre 1 µm et 7 µm ;
le coeur monomode est un verre de silice dopé au germanium,
a un rayon r₁ compris entre 3 µm et 5 µm, et un indice de réfraction relatif δ₁ qui est plus élevé que l'indice de réfraction relatif δ₀ de la première couche de transition, et δ₁- δ₀ = 0,25 %-0,4 % ; et
la nouvelle fibre optique comprend en outre une couche dopée inférieure ayant un indice d'échelons inférieur, disposée entre le coeur monomode et la couche multimode, dans lequel un indice de réfraction relatif δ₄ de la couche dopée inférieure est inférieur à l'indice de réfraction relatif δ₀ de la première couche de transition, une largeur unilatérale W₄ de la couche dopée inférieure est comprise entre 0,5 µm et 5 µm, et δ₄- δ₀ = -0,05 % ~ -0,35 %.

2. La nouvelle fibre optique selon la revendication 1, dans laquelle un indice de réfraction relatif δ₂ de la couche multimode est compris entre l'indice de réfraction relatif δ₀ de la première couche de transition et l'indice de réfraction relatif δ₅ de la seconde couche de transition, et est distribué selon un profil a, la couche multimode a un rayon r₂ compris entre 15 µm et 35 µm, et le a est compris entre 1,8 et 2,5.

3. La nouvelle fibre optique selon la revendication 1, dans laquelle la nouvelle fibre optique a un rayon r₃ compris entre 62 µm et 63 µm.

4. La nouvelle fibre optique selon la revendication 1, dans laquelle la couche dopée inférieure comprend une structure multicouche disposée coaxialement, parmi laquelle une couche dopée inférieure principale a un indice d'échelons inférieur, et les autres couches sont des couches dopées inférieures auxiliaires.

5. La nouvelle fibre optique selon la revendication 1, dans laquelle la couche dopée inférieure comprend une couche dopée inférieure principale et une couche dopée inférieure auxiliaire, dans laquelle :
une largeur W₀₄ d'une seule couche de la couche dopée inférieure principale est comprise entre 1 µm et 4 µm, et δ₀₄-δ₀ = -0,1 % ~ -0,35 % ;
une largeur W₁₄ d'une seule couche de la couche auxiliaire dopée inférieure est comprise entre 0,5 µm et 4 µm, et δ₁₄-δ₀ = -0,05 % - -0,2 %.

6. La nouvelle fibre optique selon l'une des revendications 2 ou 3, comprenant en outre une couche en retrait ayant un indice d'échelons inférieur, disposée entre la couche multimode et la couche de couverture extérieure, dans lequel un indice de réfraction relatif δ₆ de la couche évidée est inférieur à l'indice de réfraction relatif δ₅ de la seconde couche de transition, une largeur unilatérale W₆ de la couche évidée est comprise entre 2 µm et 45 µm, et un indice de réfraction relatif δ₆ de la couche évidée est compris entre -0,05 % et -0,4 %, la couche de couverture extérieure est en verre de silice pur.

7. La nouvelle fibre optique selon la revendication 6, dans laquelle la couche évidée comprend une structure multicouche disposée coaxialement, parmi laquelle une couche principale évidée a un indice d'échelons inférieur, et les autres couches sont des couches évidées auxiliaires.

8. La nouvelle fibre optique selon la revendication 6, dans laquelle la couche évidée comprend une couche évidée principale et une couche évidée auxiliaire, dans laquelle :
une largeur W₀₆ d'une seule couche de la couche principale évidée est comprise entre 2 µm et 6 µm, et un indice de réfraction relatif δ₆ de la couche principale évidée est compris entre -0,2 % et -0,4 % ;
une largeur W₁₆ d'une seule couche de la couche auxiliaire évidée est comprise entre 2 µm et 45 µm, et un indice de réfraction relatif δ₆ de la couche auxiliaire évidée est compris entre -0,05 % et 10 -0,2 %.
